# EUROPEAN PATENT APPLICATION

(11) **EP 1 428 753 A2**
(43) Date of publication of application: **16.06.2004**
(21) Application number: 03257594.6
(22) Date of filing: 03.12.2003
(51) Int. Cl.: B64D 9/00

(54) **Pallet support apparatus**

(30) Priority: 10.12.2002 GB 0228750
(71) Applicant: Grainger, Allan, Merthyr Tydfil, CF47 8YW (GB)
(72) Inventor: Grainger, Allan, Merthyr Tydfil, CF47 8YW (GB)
(74) Representative: Jones, Ithel Rhys

(57) **Abstract**

A pallet support apparatus comprising two parallel opposed substantially horizontal rails (12) spaced to receive opposed side edge portions of a pallet moved in a substantially horizontal plane between the rails. The apparatus includes one or more clamping members (30) movable to a locking position to engage the upper surface of a pallet supported by the rails, and a stop (48) on or adjacent at least one of the rails near an end of the support remote from that normally used for loading the pallet.

## Description

The present invention relates to improvements to support apparatus.

When items such as pallets are transported, they cannot necessarily rely on their own weight and that of the load that they carry to keep them fixed. They have to be constrained in some way. Traditionally, they have been lashed down by ropes, wires or chains, but those take time to set up and undo, and they are wasteful of space since there has to be room around the pallet. Also, loaded pallets cannot be directly stacked one on another.

It is therefore desirable to close pack pallets and the like in racks, but just placing them on shelves does not solve the problem. They have to be held down in transit, and it is desirable to keep the items secure in a compact arrangement, and yet easy to load and unload.

Restraining items such as pallets can be even more problematic when the racks are onboard moving aircraft and are subjected to considerable forces, e.g. 3 - 5 G. Usually, a large number of ropes, etc are required to tie the items in this situation, but this takes up a considerable amount of time and means that removing the pallets is also an awkward and time-consuming process. This is clearly disadvantageous when the contents need to be unloaded quickly in an emergency situation. Some parts of racks (e.g. especially wheels on which the pallets can roll out) that are not specially constructed to withstand the high forces can also bend, which can cause the pallet or the like to become stuck in the rack.

It can also be difficult to correctly load and unload items such as pallets from a rack that is on an uneven (or moving) surface. The frame of the rack may slope and so the rails upon which the items rest can be mis-aligned vertically. In existing racks where a pallet is slotted into a channel having lower and upper flanges, it can be difficult or impossible to correctly position the pallet into the channel using a fork lift truck or the like which holds the pallet substantially horizontally.

According to a first aspect of the present invention there is provided a pallet support apparatus comprising:
two parallel opposed substantially horizontal rails spaced to receive opposed side edge portions of a pallet moved in a substantially horizontal plane between the rails;
one or more clamping members movable to a locking position to engage the upper surface of a pallet supported by the rails, and
a stop on or adjacent at least one of the rails near an end of the support remote from that normally used for loading the pallet.

The term "substantially horizontal" applies to the apparatus when supported in use on a generally horizontal support surface.

The stop may be an elongate plate having a substantially vertical portion and a transverse portion. The transverse portion may be substantially perpendicular to the vertical portion and may extend towards the loading end of the support. Thus, the stop can take the form of an inverted L-shape when viewed from the side. The width of the stop may be substantially equal to that of the rail or it may be approximately equal in width to a pallet. Having such a stop arrangement means that a pallet can be merely lowered onto the rails and slid towards the stop so that the end of the pallet is positioned underneath the stop. The overlying portion of the stop can then help prevent vertical displacement and rearward movement of the pallet.

As an additional measure for preventing a pallet moving out of the support accidentally, the apparatus may further include one or more gate members located near the loading end of the support. The gate member may be movable between a locking position where it protrudes into the path of the pallet at or near the loading end of the support and a release position where it is clear of the path. The gate member may be movable by means of a pivot fitted near the loading end of the support. A pair of gate members may be provided, one of the pair being located near a respective one of the opposed rails. The gate member may include an angled bracket having a first portion and a second portion substantially perpendicular to the first. The second portion may extend into the path of the pallet when the gate member is in its locking position. The gate member may extend substantially along the entire height of the support.

The gate member may be fitted with a locking mechanism, such as a shoot bolt, that can engage the support. The shoot bolt may be biased, e.g. by means of a spring. Typically, the shoot bolt will be located near the top (and/or bottom) of the gate member so that the bolt can engage with a corresponding aperture or detent horizontal upper (and/or lower) strut of the support.

The clamping member may include an arm that can be moved to the locking position around a pivot. The arm may include a clamp that can be adjusted to contact the upper surface of the pallet. The adjustable clamp may include a bolt and lock nut arrangement. The clamping members will usually be located parallel with the rails.

The sides of the support may include one or more apertures or slots for receiving a member, such as a pin or strap, inserted through a corresponding aperture or slot in the side of the pallet to further help secure the pallet on the support.

Additional support may be provided for the rails by gussets which extend at an angle down from the rails to an adjacent surface of the support.

In one embodiment, the system includes a shelf movably mounted on the rails, the shelf adapted for supporting the pallet and being movable between a loading/unloading position where it protrudes at least partially beyond the loading end of the support and a storage position where it does not substantially protrude beyond the loading end. The apparatus may include a further pair of rails located spaced above and substantially parallel with the horizontal rails, in use the pallet being supported between the horizontal and further (typically upper) rails. The sides of the shelf can include low friction devices to assist sliding the shelf along the rails. The low friction device may include a wheel, which may be sized so as to contact the horizontal rail and/or the corresponding upper rail. The system can include a further low friction device, such as a wheel, located on the support beyond the loading end of the horizontal rails and substantially at the same level as the horizontal rails to help support the shelf when it is in its loading/unloading position.

A rear shelf stop may be fitted on the sides of the support at or near the end of the support remote from the loading end. A front shelf stop may be fitted to at least one side of the support at or near the loading end, the sides of the shelf including a corresponding member that can engage with the front shelf stop to limit movement of the shelf. The front shelf stop may also come into contact with the low friction device on the shelf to limit the movement of the shelf too far beyond the loading end of the rails.

The front of the shelf may be fitted with one or more impact-resistant member, such as rubber vibration suppression bumpers, intended to reduce or eliminate damage caused by contact with parts of the support (e.g. the gate members), especially during transit.

The apparatus may further include a secondary lock mechanism, typically fitted near the loading end of the support. The mechanism can include a locking member that can releasably engage the shelf. In one embodiment the locking mechanism operates under gravity to lock the shelf and requires user intervention to unlock the shelf. The shelf may include one or more projections for engaging with the locking member, the projection(s) possibly extending from the side(s) of the shelf. A said projection may be located towards the front end of the shelf and/or a said projection may be located towards the rear of the shelf. The locking member may include a pivotable elongate member. The elongate member may include a notch or cut out section for engaging a said projection. A portion of the elongate member leading to the notch may be curved to help the projection pivot the member upwards and slide into the notch.

According to a second aspect of the present invention there is provided a pallet system including a pallet support apparatus substantially as described above and one or more pallets.

According to a further aspect of the present invention there is provided a support apparatus comprising:
two parallel opposed substantially horizontal lower rails;
two parallel opposed substantially horizontal upper rails located above and spaced apart from the corresponding lower rails;
a shelf having opposed side edge portions slidably mounted on the lower rails, the shelf being moveable in a substantially horizontal plane between the upper and lower rails between a loading position where it protrudes at least partially beyond an end of the support and a storage position where it does not substantially protrude beyond the end of the support;
one or more rail stop on or adjacent one or more respective said rail;
the shelf including a first stop at or near one of its ends so that in use the movement of the shelf is limited by engagement of the rail stop with the first stop,
the shelf further including a second stop disposed between the lower and the upper rails when the shelf is in its storage position, thereby limiting vertical displacement of the shelf.

A pair of corresponding first and/or second stops is normally located on the opposing side edges of the shelf.

The sides of the shelf can include low friction devices to assist sliding the shelf along the rails. The low friction device may include a wheel, which may be sized so as to contact the horizontal rail and/or the corresponding upper rail. The system can include a further low friction device, such as a wheel, located on the support beyond the loading end of the horizontal rails and substantially at the same level as the horizontal rails to help support the shelf when it is in its loading/unloading position.

The apparatus may further include a secondary lock mechanism, typically fitted near the loading end of the support. The mechanism can include a locking member that can releasably engage the shelf. In one embodiment the locking mechanism operates under gravity to lock the shelf and requires user intervention to unlock the shelf. The shelf may include one or more projections for engaging with the locking member, the projection(s) possibly extending from the side(s) of the shelf. A said projection may be located towards the front end of the shelf and/or a said projection may be located towards the rear of the shelf. The locking member may include a pivotable elongate member. The elongate member may include a notch or cut out section for engaging a said projection. A portion of the elongate member leading to the notch may be curved to help the projection pivot the member upwards and slide into the notch.

The apparatus may further include a secondary lock mechanism, typically fitted near the loading end of the support. The mechanism can include a locking member that can releasably engage the shelf. In one embodiment the locking mechanism operates under gravity to lock the shelf and requires user intervention to unlock the shelf. The shelf may include one or more projections for engaging with the locking member, the projection(s) possibly extending from the side(s) of the shelf. A said projection may be located towards the front end of the shelf and/or a said projection may be located towards the rear of the shelf. The locking member may include a pivotable elongate member. The elongate member may include a notch or cut out section for engaging a said projection. A portion of the elongate member leading to the notch may be curved to help the projection pivot the member upwards and slide into the notch.

For a better understanding of the invention, some embodiments will now be described, by way of example, with reference to the accompanying drawings, in which:
Figure 1 is a plan view of a pallet,
Figure 2 is an underneath plan view of the pallet,
Figure 3 is a section on the line III-III of Figure 1,
Figure 4 is a section on the line IV-IV of Figure 1,
Figure 5 is a cross-section similar to Figure 3 showing the pallet supported at its sides by rails,
Figure 6 is a front elevation of part of a rack for stowing a plurality of pallets,
Figure 7 is a plan view of part of the rack of Figure 6 showing the clamping members on the support,
Figure 8 is a section through one of the clamping members,
Figure 9 shows an alternative version of the clamping member in use,
Figure 10 is a side view of a pallet clamped in a rack,
Figure 11 is a side view of a rack where a shelf is used to support an item such as a pallet, the shelf being shown in its storage position,
Figure 12 is a side view similar to Figure 11, but with the shelf in its loading/unloading position,
Figure 13 is an end view of Figure 11, and
Figure 14 is a side view of part of an embodiment of the support having a secondary stop mechanism for the pallet.

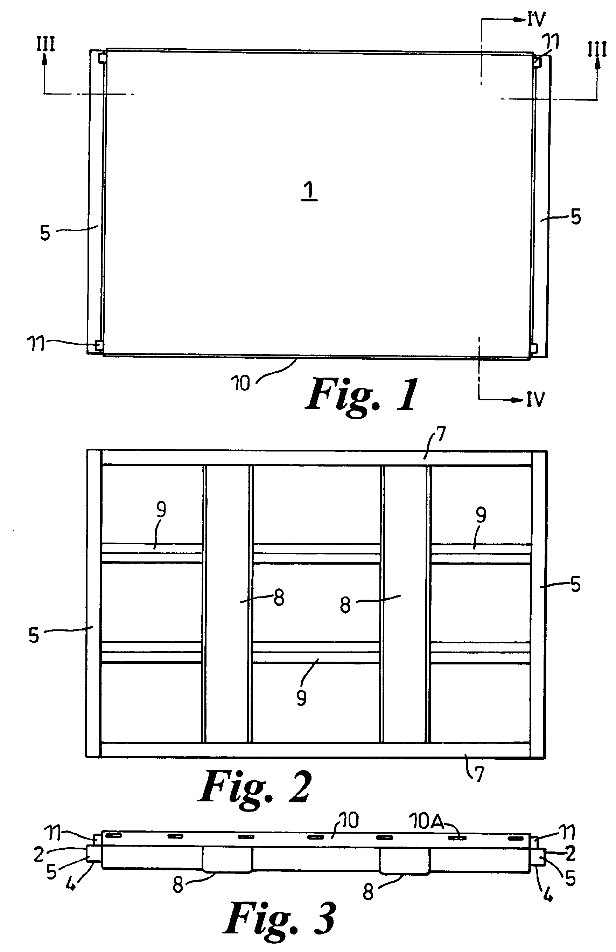

The pallet of Figures 1 to 4 is rectangular in plan view and has a flat platform 1 supported by a peripheral frame including inverted L-section members 2 and 3 whose horizontal flanges extend outwardly. The side members 2 are augmented by further L-section members 4 welded on to create box-section ribs 5, and likewise the transverse members 3 are augmented by L-section members 6 to make box-section ribs 7. Underneath the platform 1, there are two parallel box-section beams 8 extending between and through the ribs 7 so that their open ends can receive the forks of a lifting truck. Reinforcing ribs 9 of V-section extend transversely between these beams 8, and between the beams 8 and the side ribs 5. Around the platform 1 there is a low rail or pierced fence 10 which at the sides are set back in from the outer edges of the ribs 5 but whose transverse portions are flush with the outsides of the ribs 7.

Guide elements 11 are provided at the corners of the pallet, on top of the ribs 5. These are short lengths of L-section whose flanges are vertical and which are welded so that the free end of the larger flange goes right to the associated corner of the fence 10, while the free edge of the shorter flange is a short distance along the fence from the corner. The fence 10 has several horizontal slots 10A arranged at intervals along it.

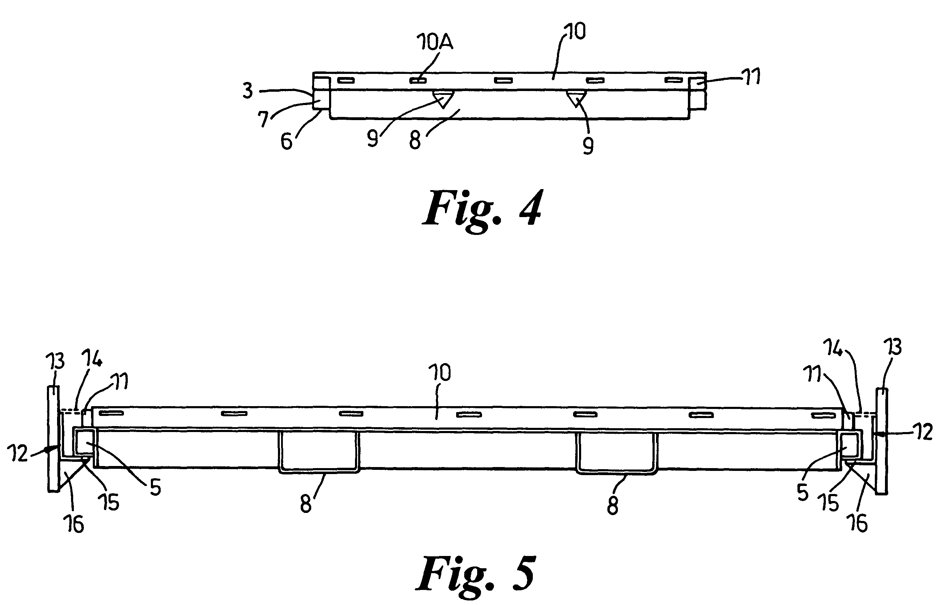

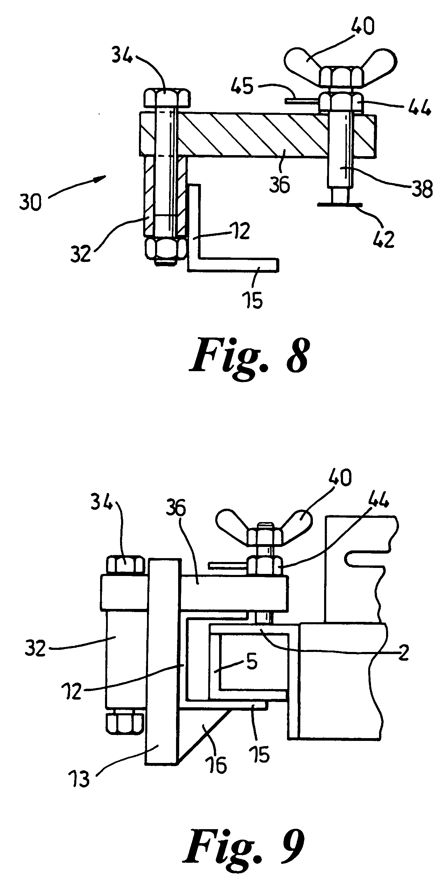

Turning to Figure 5, a support apparatus for such a pallet is shown. The support includes two parallel opposed rails 12. These are of L-shaped cross-section and are secured horizontally to a framework 13 so that the horizontal flanges 15 of the L-shapes extend towards each other. Additional support is provided for the rails 12 by gussets 16 which extend at an angle down from the lower surface of the horizontal flanges 15 to the adjacent surface of the framework 13. As can be seen from Figure 8, the flanges 15 carry the pallet by the side ribs 5.

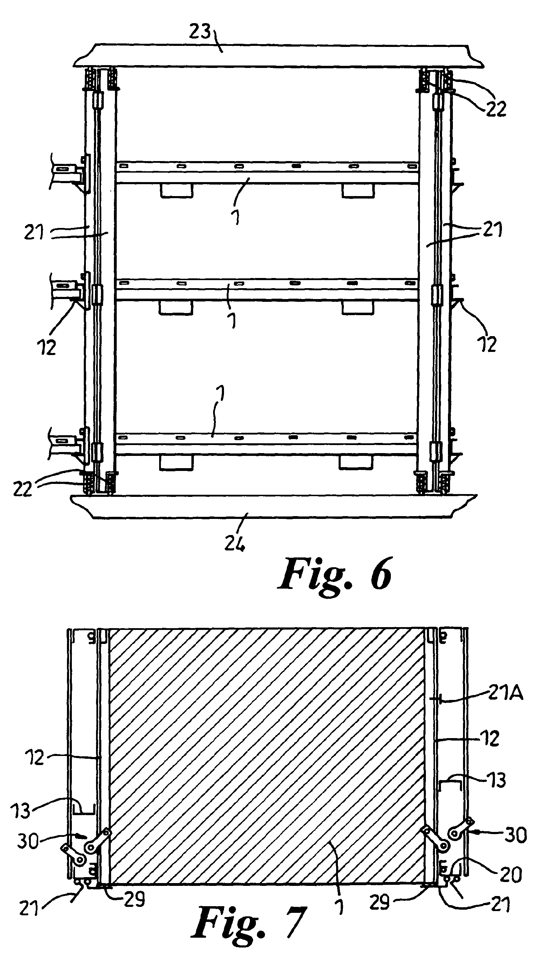

Figures 6 and 7 illustrate one possible arrangement for a framework or rack 13 that has several sets of rails 12 one above the other in one bay and similar sets of rails in adjacent bays either side, the latter not being shown in full.

The exposed face of each upright 20 at the front of the framework, defining a division between bays, has two L-section flaps 21 hinged thereto extending over the full length of the upright. They are side-by-side and back-to-back, the hinging being along the edges of the narrower flanges so that the wider flanges can each be swung between a position blocking the adjacent ends of the rails 12 (as shown for the central bay) and a position projecting outwardly from the upright 20 where they do not obstruct any rails (as shown for the lateral bays). At the top and bottom of each wider flange, on the convex side of the L, there are spring-loaded bolts 22 which will automatically snap into associated detents in the top and bottom sills 23 and 24 of the framework 13 when the flaps are closed. These may be linked so that a common actuation can release both bolts on one flap simultaneously.

This arrangement allows for re-setting the heights of the rails 12 without the need to attend to this safety measure. The width of the narrow flanges and the spacing of the hinges on each upright can be such that only one flap per upright can be fully opened at any one time. The pallet includes rubber bumpers 29 located near each side of its front end which can come into contact with the adjacent surface of the flaps 21 when they are in their locking position to reduce potential damage.

It will be understood that the framework 13 could provide back-to-back bays instead of or additionally to side-by-side ones. Where the uprights 20 are at corners, they will of course only have one flap 21.

The slots 10A in the fence 10 on the edges of the pallet can be used for receiving a cargo net, straps or the like for holding down the items on the pallet. Pins (indicated schematically at 21A in Figure 7) can be inserted through similar slots arranged along the side edges of the framework 13 adjacent where the pallet is supported. This assists in securing the pallet on the support by linking the pallet fence to the framework when the pallet is being stored and the pins can be removed when the pallet is to be released.

In addition to the hinged flaps 21 located at the ends of the uprights 20, each rail 12 is provided with a clamp member 30 to help prevent displacement of the pallet being supported. Several different versions of the additional clamp member are possible, e.g. a form of toggle clamp arrangement that can be actuated by a lever, but one of the most effective is shown in Figure 8.

The clamp 30 in Figure 8 includes a cylindrical sleeve 32 which is welded onto the outer side (i.e. the side opposite that abutting the rail 12) of the rail 12. The sleeve 32 houses a bolt 34 which is fitted through a plain aperture near one end of an arm member 36. The arm 36 can thus pivot around the bolt 34 on top of the sleeve 32.

In the alternative embodiment shown in Figure 9, the cylinder 32 is fixed to the outer side of the framework 13, with the arm 36 swinging through a slot in the framework so that the end of the clamp can be moved as required.

Near the other end of the arm 36 is a threaded aperture through in which a threaded bolt 38 is engaged. The top of the bolt 38 has a winged end 40, and on the bottom of the bolt there is a disc 42. A lock nut 44 is threaded onto the threaded shaft of the bolt 38 between the upper surface of the arm 36 and the winged end 40. A rod 45 extends from the outer surface of the lock nut 44 that can be used to help turn the nut.

In use, a pallet is placed on the rail 12 as described above and the hinged flaps 21 may be closed to help prevent the pallet being displaced in a horizontal direction. The arm 36 of the clamping member 30 is swung around the bolt 34 so that the other end of the arm carrying the threaded bolt 38 is located substantially above the associated L-section side member 2 of pallet rib 5. At this point the bolt 38 is screwed down so that the disc 42 engages and clamps the side member 2 of the pallet against the rail 12. The bolt 38 may be locked in this position by running the lock nut 44 down to engage the arm 36. This helps secure the pallet against possible tipping and/or vertical movement.

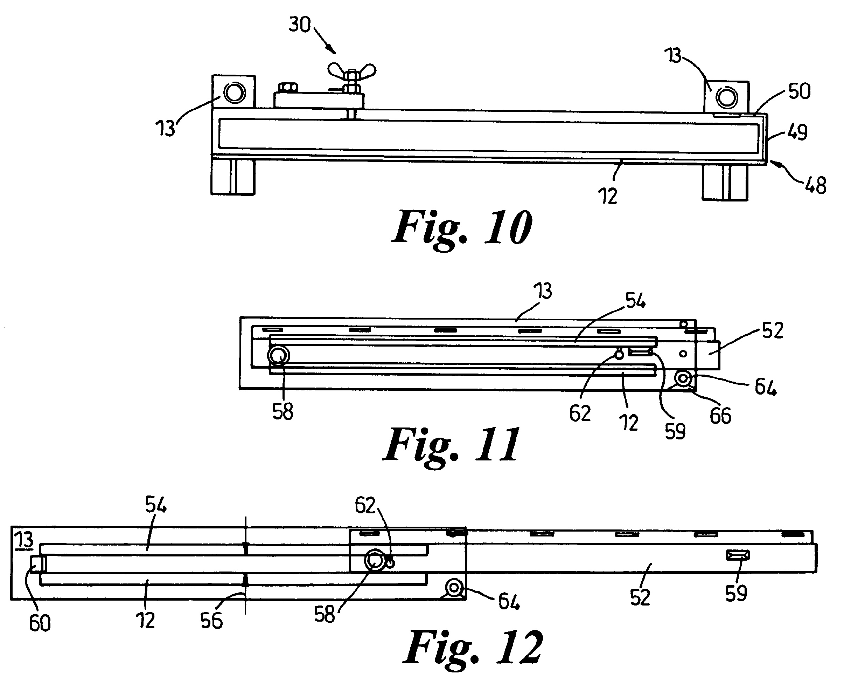

Referring to Figure 10, at the rear of the rack (i.e. the end opposite to the one used as the usual entrance for pallets) there is a rear stop/lip 48. This is an L-shaped bracket of roughly the same width as the rails 12, fitted in an upside down orientation onto the rear end of the rails 12. The vertical flange 49 of the stop 48 protrudes into the intended path of the pallet at the end of the rail. The horizontal flange 50 of the stop 48 overlies the rear end of the rail and helps constrain vertical movement of the pallet and thus prevent the pallet being displaced off the rack.

The equivalent of the rails 12 on conventional pallet racks include an upper flange (illustrated schematically by a broken line 14 in Figure 5) located above and parallel to the horizontal flange 15. The absence of such an upper flange in the embodiment described above means that it is much easier to place a pallet on the rail 12 (e.g. by means of a forklift truck), especially when the support is on an uneven surface. It is no longer necessary to have the support placed on a perfectly horizontal surface so that the opposing rails are exactly aligned as the pallet no longer needs to be slid between a channel formed between the upper and lower flanges. However, when the pallet is fully loaded on the rails, the presence of the rear stop 48 means that the pallet is constrained vertically, especially when it is supported at its front end by the flaps 21 and/or by the clamping members 30.

Turning to Figures 11 to 13, there is shown another rack that includes non-removable shelves that are intended to be deployed rapidly. The examples below describe pallets being placed on the shelves, although it will be understood that items other than pallets could be placed directly onto the shelves. One or more of the shelves can be used in a rack containing pallets similar to the racks shown in the earlier figures or a rack just including the shelves described below can be manufactured. For simplicity, only one side of the rack will be described, but it will be understood that the opposite side of the rack also includes a similar arrangement. A shelf 52 for supporting a pallet is mounted on the horizontal rails 12. The support framework 13 further includes a second pair of rails 54 located above the rails 12 and parallel therewith. The space (denoted by arrows 56) between the upper 54 and lower 12 sets of rails is roughly equal to or greater than the diameter of a wheel 58 fitted on an axle protruding perpendicularly from the sides of the pallet. The wheel 58 helps the shelf glide smoothly along the rails. Also fitted on the sides of the shelf, towards its front end, are vertical restricting stops 59. The stops 59 are positioned so that when the shelf is in its storage position (as shown in Figure 11), they abut the lower surface of the upper rail 54 and help prevent vertical displacement of the shelf, but when the shelf is away from the storage position and the stops 59 beyond the rails, the shelf may be tipped as required relative to the rails to allow the shelf to be manoeuvred.

A rear shelf stop 60 protrudes from the framework 13 into the path of the shelf between the two sets of rails 12, 54 at the rear end of the rails. Movement of the shelf is limited by the rear end of the shelf coming into contact with the stop 60. The movement of the shelf towards the loading end of the support is limited by a front shelf stop 62. The stop 62 projects from the framework 13 between the two sets of rails and is located near the front end of the rails. The wheels 58 on the shelf come into contact with the stop 62 when the shelf is moved to its loading/unloading position (as shown in Figure 12) and this contact prevents the shelf from moving too far in that direction.

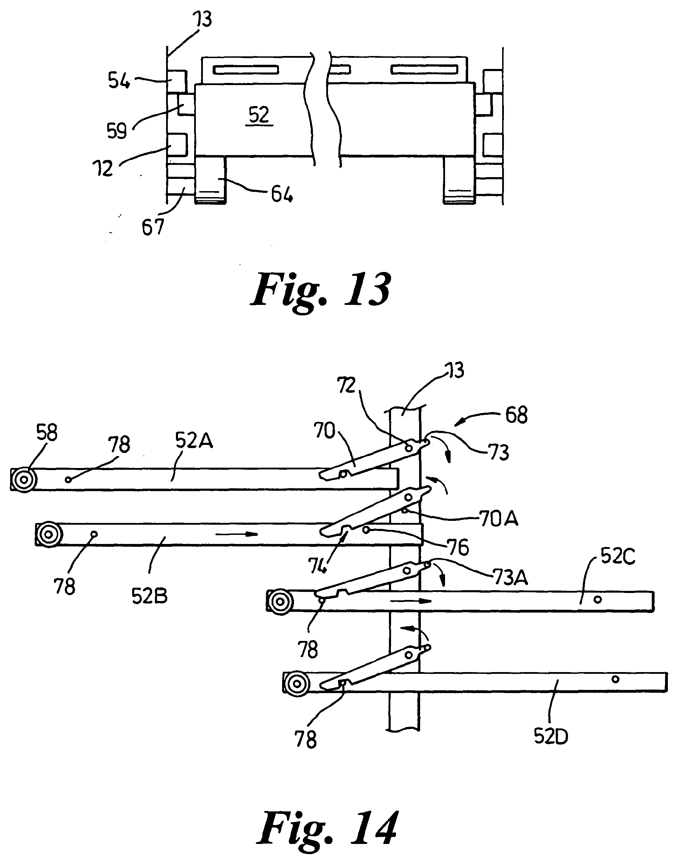

Also fitted on the same side of the framework 13 as the rails 12, 54 is a framework wheel 64. The wheel 64 is mounted on an axle near the loading end of the support and is positioned so that the top of the wheel comes into contact with the lower surface of a the shelf being moved to the loading/unloading position. The wheel 64 provides additional support for the shelf and its load in the loading/unloading position. Arranged radially around the wheel 64 (spaced apart by around 120°) are three wheel reinforcements 66. The reinforcements 66 are angled brackets that extend from a mounting (visible as 67 in Figure 13) located between the wheel 64 and the framework 13 to the adjacent framework.

Turning to Figure 14, a secondary shelf locking mechanism 68 is shown. The secondary locking mechanism acts as a safety feature and is easily controllable by the user. The mechanism 68 is intended to be used when the other locking devices such as the flaps 21 and the clamps 30 are released and helps prevent the shelf sliding out inadvertently at that time. In Figure 14 a plurality of shelves 52A - 52D is shown fitted in the support. The shelves 52A - 52D are shown at various positions to illustrate the use of the secondary locking mechanism. It will be understood that the shelves are shown closer together than would be usual in an actual rack system and that certain features have been omitted for clarity. It will also be understood that a similar arrangement will be included on the opposing side of the shelves and support.

The mechanism 68 includes an elongate member 70 mounted on the same side of the framework 13 as the rails 12, 54 (not shown in Figure 14) by means of a pivot 72. The centre of the pivot 72 can be located directly above the centre of the axle of the wheel 64 (not shown in Figure 14). The pivot 72 protrudes through an aperture located around 5/6th of the length of the elongate member 70. The end of the shorter portion of the member 70 (adjacent the loading end of the support) acts as a latch bar 73. The end of the longer portion of the member 70 is curved and leads to a notch 74 formed on the lower edge of the member 70.

A front stop 76 projects outwardly from the side of the shelf 52 towards its front end and a similar rear stop 78 is located towards the rear end of the shelf. The stops 76, 78 are dimensioned so that they do not normally interfere with the sliding of the shelf unless they come into contact with the elongate member 70 as described below.

When the shelf is in its storage position, the front stop 76 engages the notch 74, as shown by shelf 52A in Figure 14. This engagement prevents the shelf moving further out of (or into) the support. When the user is ready the allow the shelf to slide out further he pushes down on the latch bar 73 so that the member 70 pivots around the pivot 72, thereby lifting up the opposite end of the member 70. This frees the front stop 76 from the notch 74 and allows the shelf/stop to slide outwardly past the notch. Thus, the locking mechanism 68 operates under gravity to lock the shelf and requires user intervention to unlock it. The user can then release the latch bar 73 and the end of the longer portion of the member 70 can drop down, as shown by shelf 52B. The framework 13 can include a pivot stop, e.g. 70A, to prevent the longer end of the elongate member 70 dropping down below a certain point. Alternatively, the end of the latch bar 73 can include a protrusion (indicated schematically at 73A) that can engage the rear face of the framework 13 to limit the movement of the bar.

As the shelf continues to slide out of the support the end of the longer portion of the member 70 will come into contact with the rear stop 78, as shown by shelf 52C. The curved surface at the end of the member 70 means that the end of the member 70 runs over the rear stop 78 until the stop becomes engaged in the notch 74, as shown by shelf 52D. It will be appreciated that the user can control the sliding of the shelf manually to some extent to help ensure that this engagement takes place. The engagement of the rear stop 78 in the notch 74 allows the shelf to be retained in this position. When the shelf is to be slid again, the user pushes down on the latch 73 to disengage the rear stop 78 which allows the shelf to be moved.

The embodiments including the rapid deployment mechanism can be used to easily and safely release a container to be dropped by parachute from an aircraft.

## Claims

1. A pallet support apparatus comprising:
two parallel opposed substantially horizontal rails (12) spaced to receive opposed side edge portions of a pallet moved in a substantially horizontal plane between the rails;
one or more clamping members (30) movable to a locking position to engage the upper surface of a pallet supported by the rails, and
a stop (48) on or adjacent at least one of the rails near an end of the support remote from that normally used for loading the pallet.

2. Apparatus according to Claim 1, wherein the stop (48) includes an elongate plate having a substantially vertical portion (49) and a transverse portion (50), the transverse portion being substantially perpendicular to the vertical portion and extending towards the loading end of the support.

3. Apparatus according to Claim 2, wherein the width of the stop (48) is substantially equal to that of the rail (12) or the stop is approximately equal in width to a pallet.

4. Apparatus according to any one of the preceding Claims, further including one or more gate members (21) located near the loading end of the support, the gate member being movable between a locking position where it protrudes into the path of the pallet at or near the loading end of the support and a release position where it is clear of the path.

5. Apparatus according to Claim 4, wherein the gate member (21) is movable by means of a pivot fitted near the loading end of the support.

6. Apparatus according to Claim 4 or 5, wherein a pair of said gate members (21) is provided, one of the pair being located near a respective one of the opposed rails (12), the gate member including an angled bracket having a first portion and a second portion substantially perpendicular to the first, the second portion extending into the path of the pallet when the gate member is in its locking position.

7. Apparatus according to any one of Claims 4 to 8, wherein the gate member (21) extends substantially along the entire height of the support.

8. Apparatus according to any one of Claims 4 to 7, wherein the gate member (21) is fitted with a locking mechanism, such as a biased shoot bolt (22), that can engage the support.

9. Apparatus according to any one of the preceding Claims, wherein the clamping member (30) includes an arm (36) that can be moved to the locking position about a pivot (34).

10. Apparatus according to Claim 9, wherein the arm (36) includes a clamp (38, 40, 42) that can be adjusted to contact the upper surface of the pallet.

11. Apparatus according to any one of the preceding Claims, wherein clamping members (30) are located parallel with the rails (12).

12. Apparatus according to any one of the preceding Claims, wherein sides of the support include one or more apertures (10A) or slots for receiving a member, such as a pin or strap, inserted through a corresponding aperture or slot in the side of the pallet to further help secure the pallet on the support.

13. Apparatus according to any one of the preceding Claims, further including a shelf (52) movably mounted on the rails (12), the shelf adapted for supporting the pallet and being movable between a loading/unloading position where it protrudes at least partially beyond the loading end of the support and a storage position where it does not substantially protrude beyond the loading end.

14. Apparatus according to Claim 13, including a further pair of rails (54) located spaced above and substantially parallel with the horizontal rails (12), in use the pallet being supported between the horizontal and further rails.

15. Apparatus according to Claim 13 or 14, wherein sides of the shelf (52) include low friction devices, such as a wheel (58), to assist sliding the shelf along the rails (12).

16. Apparatus according to Claim 15, when dependent on Claim 14, wherein the wheel (58) is sized so as to contact the horizontal rail (12) and the corresponding upper rail (54).

17. Apparatus according to any one of Claims 13 to 16, including a low friction device, such as a wheel (64), located on the support beyond the loading end of the horizontal rails and substantially at the same level as the horizontal rail(s) to help support the shelf (52) when it is in its loading/unloading position.

18. Apparatus according to any one of Claims 13 to 17, further including a rear shelf stop (60) fitted on the sides of the support at or near the end of the support remote from the loading end.

19. Apparatus according to any one of Claims 13 to 18, further including a front shelf stop (62) fitted to at least one side of the support at or near the loading end, the sides of the shelf (52) including a corresponding member that can engage with the front shelf stop to limit movement of the shelf.

20. Apparatus according to any one of Claims 13 to 19, wherein the front of the shelf (52) is fitted with one or more impact-resistant member, such as rubber vibration suppression bumpers (29), intended to reduce or eliminate damage caused by contact with parts of the support.

21. Apparatus according to any one of Claims 13 to 20, further including a secondary lock mechanism (68) fitted near the loading end of the support, the lock mechanism including a locking member (70) that can releasably engage the shelf (52).

22. Apparatus according to Claim 21, wherein lock mechanism (68) operates under gravity to lock the shelf and requires user intervention to unlock the shelf.

23. Apparatus according to Claim 21 or 22, wherein the shelf (52) includes one or more projections (76, 78) for engaging with the locking member (70).

24. Apparatus according to Claim 23, wherein the locking member (70) includes a pivotable elongate member having a notch (74) or cut out section for engaging a said projection (76).

25. A pallet system including a pallet support apparatus according to any one of the preceding Claims and one or more pallets.

26. A support apparatus comprising:
two parallel opposed substantially horizontal lower rails (12);
two parallel opposed substantially horizontal upper rails (54) located above and spaced apart from the corresponding lower rails;
a shelf (52) having opposed side edge portions slidably mounted on the lower rails, the shelf being moveable in a substantially horizontal plane between the upper and lower rails between a loading position where it protrudes at least partially beyond an end of the support and a storage position where it does not substantially protrude beyond the end of the support;
one or more rail stop (60, 62) on or adjacent one or more respective said rail;
the shelf including a first stop (59) at or near one of its ends so that in use the movement of the shelf is limited by engagement of the rail stop with the first stop,
the shelf further including a second stop (58) disposed between the lower and the upper rails when the shelf is in its storage position, thereby limiting vertical displacement of the shelf.

27. Apparatus according to Claim 26, including a pair of corresponding first (59) and second stops (58) located on the opposing side edges of the shelf (52).
